# EUROPÄISCHE PATENTSCHRIFT

(11) **EP 0 981 700 B1**
(45) Veröffentlichungstag und Bekanntmachung des Hinweises auf die Patenterteilung: **28.04.2004**
(21) Anmeldenummer: 98916629.3
(22) Anmeldetag: 07.05.1998
(51) Int. Cl.: F16J 3/04, F16D 3/84

(54) **ACHSMANSCHETTE**
AXLE COVER
MANCHON D'AXE

(30) Priorität: 16.05.1997 AT 84297
(43) Veröffentlichungstag der Anmeldung: 01.03.2000
(73) Patentinhaber: Reich, Josef, 2391 Kaltenleutgeben (AT)
(72) Erfinder: Reich, Josef, 2391 Kaltenleutgeben (AT)
(74) Vertreter: Holzer, Walter, Dipl.-Ing.
(86) Internationale Anmeldenummer: PCT/AT1998/000118
(87) Internationale Veröffentlichungsnummer: WO 1998/053227

(56) Entgegenhaltungen:
- EP-A- 0 403 163
- WO-A-91/14109
- DE-A- 3 324 997
- FR-A- 2 686 671
- US-A- 4 878 389

## Beschreibung

Die Erfindung betrifft eine Manschette zum Abdecken von Drehteilen, insbesondere des Achsgelenkes einer Kraftfahrzeugachse, mit einem Faltenbalgen aus Gummi, wobei der Faltenbalg an beiden Enden mit Ringabschnitten und über seiner Länge mit zumindest einem Zwischenringabschnitt für ein Befestigungs-Spannband zur Erzielung einer vorbestimmten Manschettenlänge versehen ist, und wobei jeder Zwischenringabschnitt zylinderförmig ist und zumindest auf seiner dem benachbarten endseitigen Ringabschnitt zugekehrten Seite eine Anschlag-Umfangsrippe für das Befestigungs-Spannband aufweist und nach dem Abtrennen des benachbarten Balgenabschnittes zur Erzielung einer vorbestimmten Manschettenlänge einen endseitigen Ringabschnitt bildet.

Derartige Manschetten sind z.B. aus Dokument US-4 878 389 bekannt und dienen zur Abdeckung verschiedener mechanischer Drehteile bzw. Verbindungen in Fahrzeugen, Maschinen usw., um diese abgedeckten Teile vor Verschmutzung zu schützen.

Bei einer aus der EP-0 543 011 B1 bekannten Manschette erfolgt die gegenseitige Verbindung ihrer Längsränder über einen weiblichen und einen männlichen Längsrandabschnitt, die eine innere Federverstärkung zur Erzielung einer Vorspannung bzw. einer Rastverbindung aufweisen. Die Praxis hat gezeigt, daß diese Konstruktion nicht nur in der Herstellung äußerst aufwendig, sondern auch im Gebrauch unverläßlich ist. Die bekannte Manschette ist außerdem so ausgebildet, daß sie nur für einen bestimmten Einsatz geeignet ist, so daß für verschiedene Anwendungszwecke eine Vielzahl von Manschetten unterschiedlicher Größe auf Lager gehalten werden muß.

Bei einer aus der FR-A2 686 671 bekannten Manschette Art sind auf beiden Seiten eines Balgenabschnittes nebeneinander angeordnete konische Zwischenringabschnitte verschiedener Durchmesser vorgesehen, wobei Nuten zwischen den Zwischenringabschnitten liegen, an denen zur Erzielung eines erforderlichen Durchmessers abgetrennt wird. Es ergeben sich dabei flache, konkav gewölbte Ringabschnitte zur Aufnahme von Spannbändern. Der Nachteil dabei ist, daß die Zwischenringabschnitte nicht zur Erzielung einer vorbestimmten Manschettenlänge ausgeführt sind, sondern daß ein Zwischenringabschnitt mit einem geeigneten Durchmesser zur Verbindung mit einem Achsengelenk oder Schaft gewählt wird. Die Verbindung der Längsränder erfolgt über eine Art Keilverbindung. Bei der bekannten Lösung bewirkt das Einstecken eines trapezförmigen männlichen Verbindungsrandes in eine welbliche Aufnahme keine gleichmäßige Belastung entlang der Oberflächen der Verbindungsränder. Dadurch ist die Beanspruchbarkeit und Stabilität der Verbindung verringert. Ein weiterer Nachteil ist, daß die formschlüssige Halterung der Spannbänder durch die flachen, konkav gewölbten Zwischenringabschnitte nicht optimal ist.

Die US-4 878 389 A zeigt zwar die Verwendung von durch Rippen begrenzte Spannbandaufnahmen, doch handelt es sich um eine geschlossene Manschette, deren Montage entsprechend schwierig ist.

Die vorliegende Erfindung zielt darauf ab, die geschilderten Mängel des Standes der Technik zu vermeiden und erreicht dies bei einer Manschette der einleitend angegebenen Art dadurch, daß der Faltenbalgen, wie an sich bekannt einen Längsschlitz aufweist, dessen Ränder über einen weiblichen und einen männlichen Verbindungsabschnitt durch Klebstoff verbindbar sind, der in eine zwischen den Verbindungsabschnitten ausgesparte Kammer eingebracht ist, und daß der weibliche und der männliche Verbindungsabschnitt gekrümmte Kontur haben, so daß die dazwischen ausgesparte Kammer sichelförmig ausgebildet ist.

Gemäß einer Ausführungsform der Erfindung weist der Faltenbalgen zwei voneinander durch einen Balgenabschnitt beabstandete Zwischenringabschnitte auf, von denen einer an einen endseitigen Ringabschnitt anschließt.

Erfindungsgemäß wird mit ein und derselben Manschetten-Grundform das Auslangen gefunden und eine Vielzahl von praktischen Anwendungen ermöglicht. Die Anzahl und Anordnung der Zwischenringabschnitte kann an sich beliebig gewählt werden, doch hat sich in der Praxis die Anordnung von zwei beabstandeten Zwischenringabschnitten als vorteilhaft erwiesen. Vorzugsweise schließt einer der Zwischenringabschnitte an einen endseitigen Ringabschnitt an.

Durch die erfindungsgemäße Ausbildung wird sichergestellt, daß einerseits eine Größenveränderung der Manschette für verschiedene Anwendungszwecke mit formschlüssiger Halterung der Spannbänder ohne weiteres möglich ist, und anderseits trotz der Größenveränderung bei leichter Montierbarkeit des Balges eine einwandfreie und sichere Verbindung der Manschettenabschnitte gewährleistet wird, weil die Verbindungsränder gleichmäßig belastet werden und stets eine ausreichende Klebstoffmenge für die Verklebung zur Verfügung steht. Mit anderen Worten sichert die Erfindung in jedem Fall eine form- und kraftschlüssige Verbindung der Manschettenabschnitte sowohl in Umfangsrichtung als auch in Längsrichtung.

Die Erfindung wird nachfolgend an einem Ausführungsbeispiel unter Bezugnahme auf die Zeichnungen näher erläutert.
Fig. 1 zeigt schematisch eine Manschette gemäß der Erfindung in der Seitenansicht und
Fig. 2 einen schematischen Teilquerschnitt der Manschette in vergrößerter Darstellung.

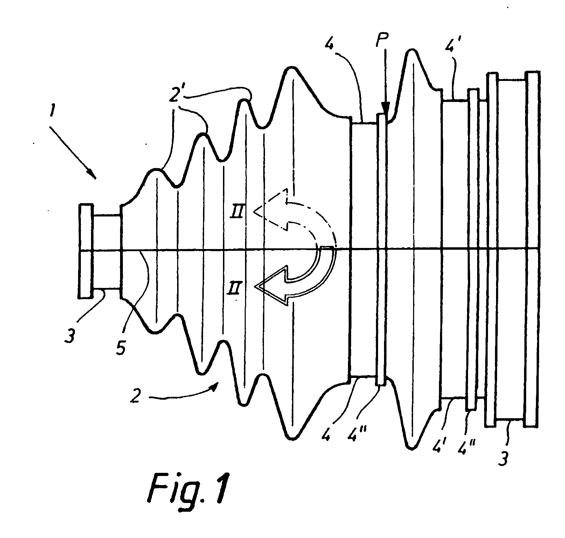

Gemäß Fig. 1 weist eine aus Gummi bestehende Manschette 1 einen Faltenbalgen 2 mit mehreren, von einem Balgenende zum anderen zunehmenden Durchmesser aufweisende Balgenwellen 2' auf. Der Balgen ist an den Enden mit zylindrischen Ringabschnitten 3 zum Anbringen von nicht gezeigten Befestigungs-Spannbändern versehen, mit welchen die Manschette an Achsen, Gelenken usw. befestigt wird. Zur Abstimmung der Länge der Manschette an den betreffenden Anwendungsfall sind beim gezeigten Ausführungsbeispiel zwei Zwischenringabschnitte 4, 4' vorgesehen, die zumindest auf der dem benachbarten Balgenende zugekehrten Seite je eine Umfangsrippe 4" als Anschlag für das Spannband aufweisen. Die Manschette 1 kann infolge dieser Ausbildung durch Abtrennen eines Balgenabschnittes an einer der Umfangsrippen 4" auf der dem benachbarten endseitigen Ringabschnitt 3 zugekehrten Seite (Pfeil P) verkürzt werden.

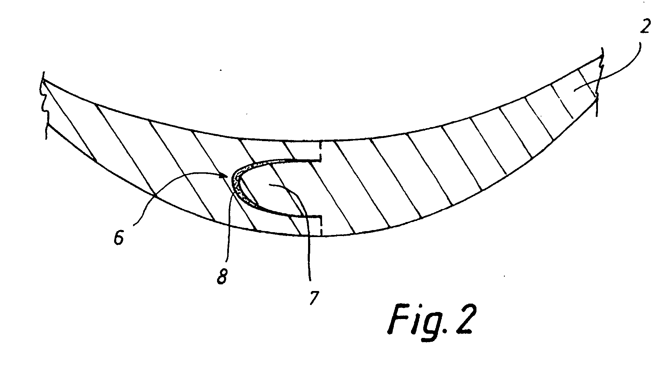

Zum Anbringen der Manschette ist diese mit einem Längsschlitz 5 versehen, wobei die Längsränder gemäß Fig. 2 verdickt sind und je eine ovalförmige weibliche Aufnahme 6 sowie einen ovalförmigen männlichen Vorsprung 7 aufweisen. Die gegenseitige Verbindung erfolgt durch Klebstoff, der in eine zwischen der Aufnahme und dem Vorsprung ausgesparte sichelförmige Kammer 8 eingebracht wird.

Das gezeigte Ausführungsbeispiel ist hinsichtlich der Anzahl der Zwischenringabschnitte, deren Lage relativ zu den endseitigen Ringabschnitten und der Ausbildung der Verbindungsrandabschnitte im Rahmen der Ansprüche abwandelbar.

## Patentansprüche

1. Manschette zum Abdecken von Drehteilen, insbesondere des Achsgelenkes einer Kraftfahrzeugachse, mit einem Faltenbalgen (2) aus Gummi, wobei der Faltenbalg (2) an beiden Enden mit Ringabschnitten (3) und über seiner Länge mit zumindest einem Zwischenringabschnitt (4, 4') für ein Befestigungs-Spannband zur Erzielung einer vorbestimmten Manschettenlänge versehen ist, und wobei jeder Zwischenringabschnitt (4, 4') zylinderförmig ist und zumindest auf seiner dem benachbarten endseitigen Ringabschnitt (3) zugekehrten Seite eine Anschlag-Umfangsrippe (4") für das Befestigungs-Spannband aufweist und nach dem Abtrennen des benachbarten Balgenabschnittes zur Erzielung einer vorbestimmten Manschettenlänge einen endseitigen Ringabschnitt bildet, **dadurch gekennzeichnet, daß** der Faltenbalgen (2), wie an sich bekannt, einen Längsschlitz (5) aufweist, dessen Ränder über einen weiblichen (6) und einen männlichen Verbindungsabschnitt (7) durch Klebstoff verbindbar sind, der in eine zwischen den Verbindungsabschnitten ausgesparte Kammer eingebracht ist, und daß der weibliche (6) und der männliche Verbindungsabschnitt (7) gekrümmte Kontur haben, so daß die dazwischen ausgesparte Kammer (8) sichelförmig ausgebildet ist.

2. Manschette nach Anspruch 1, **dadurch gekennzeichnet, daß** der Faltenbalgen (2) zwei voneinander durch einen Balgenabschnitt beabstandete Zwischenringabschnitte (4, 4') aufweist, von denen einer an einen endseitigen Ringabschnitt (3) anschließt.

## Claims

1. Boot for covering swivel parts, in particular the steering swivel of a motor vehicle axle, comprising bellows (2) made of rubber, the bellows (2) being provided at both ends with annular portions (3) and over their length with at least one intermediate annular portion (4, 4') for a retaining strap in order to obtain a predetermined boot length, and each intermediate annular portion (4, 4') being cylindrical, being provided at least on its side directed towards the adjacent end annular portion (3) with a circumferential stop rib (4") for the retaining strap and, once the adjacent bellows portion has been removed in order to obtain a predetermined boot length, forming an end annular portion, **characterised in that**, as is known per se, the bellows (2) have a longitudinal slot (5), the edges of which can be connected together via a female (6) and a male connecting portion (7) by means of adhesive introduced into a chamber hollowed out between the connecting portions and that the female (6) and the male connecting portions (7) have a curved contour so that the chamber (8) hollowed out therebetween is sickle-shaped.

2. Boot according to claim 1, **characterised in that** the bellows (2) have two intermediate annular portions (4, 4') separated from one another by means of a bellows portion, one of these intermediate annular portions being connected to an end annular portion (3).

## Revendications

1. Manchon pour recouvrir des pièces rotatives, en particulier l'articulation d'un axe de véhicule, avec un soufflet (2) en caoutchouc, dans lequel le soufflet (2) est muni à ses deux extrémités de tronçons annulaires (3) et sur sa longueur d'au moins un tronçon annulaire intermédiaire (4,4') pour un collier de serrage de fixation afin d'obtenir une longueur de manchon prédéterminée, et dans lequel chaque tronçon annulaire intermédiaire (4,4') est de forme cylindrique et, au moins sur son côté tourné vers le tronçon annulaire d'extrémité voisin (3), comporte une nervure périphérique de butée (4") pour le collier de serrage de fixation, et, après séparation du tronçon de soumet voisin pour l'obtention d'une longueur de manchon prédéterminée, forme un tronçon annulaire d'extrémité,
**caractérisé en ce que**
le soufflet (2), comme cela est connu en soi, présente une fente longitudinale (5) dont les bords peuvent être raccordés au moyen de tronçons de raccordement mâle (7) et femelle (6) par une colle qui est disposée dans une chambre ménagée entre les tronçons de raccordement, et **en ce que** le tronçon de raccordement mâle (7) et le tronçon de raccordement femelle (6) ont un contour incurvé de sorte que la chambre (8) ménagée entre ceux-ci a une forme de croissant.

2. Manchon selon la revendication 1, **caractérisé en ce que** le soumet (2) présente deux tronçons annulaires intermédiaires (4,4') espacés entre eux par un tronçon de soufflet et dont l'un se raccorde sur un tronçon annulaire (3) d'extrémité.
